# EUROPEAN PATENT SPECIFICATION

(11) **EP 3 916 920 B1**
(45) Date of publication and mention of the grant of the patent: **01.06.2022**
(21) Application number: 21174337.2
(22) Date of filing: 18.05.2021
(51) Int. Cl.: H01R 4/62, H01R 4/18, H01R 43/02, B23K 15/00, H01R 4/02

(54) **TERMINAL CONNECTING STRUCTURE**
ANSCHLUSSSTRUKTUR
STRUCTURE DE CONNEXION DE BORNE

(30) Priority: 27.05.2020 JP 2020091961
(43) Date of publication of application: 01.12.2021
(73) Proprietor: Yazaki Corporation, Minato-ku Tokyo 108-8333 (JP)
(72) Inventor: Tanaka, Hiroyuki, Kakegawa-shi, 437-1421 (JP); Takamatsu, Masahiro, Makinohara-shi, 421-0407 (JP)
(74) Representative: Hoffmann Eitle

(56) References cited:
- EP-A1- 2 131 448
- WO-A1-2004/047227
- WO-A1-2011/096527
- WO-A1-2013/183265
- DE-B3-102013 101 080
- US-A1- 2011 094 797
- US-A1- 2018 197 660

## Description

### Technical Field

The present invention relates to a terminal connecting structure.

### Background Art

An automobile is equipped with various types of electronic devices, wherein wire harnesses are arranged therein in order to transfer e.g. electric power and/or control signals to such electronic devices. A wire harness includes a plurality of electric wires and a connector, wherein the wire harness is connected to an electronic device or another wire harness by mating this connector to a connector of the electronic device or of the other wire harness.

For electric wires for forming such a wire harness, aluminum may be used as material for conductor cores. As a connecting structure for connecting a terminal to the aluminum electric wires having such aluminum conductor cores, a technique is disclosed in which when connecting the aluminum electric wire to the terminal, a ultrasound joint process is applied to a strand consisting of conductor cores to joint the conductor cores with each other and thus form a bundle of cores while destroying an oxide coating on surfaces of the conductor cores, wherein a terminal is connected to the bundle of cores via crimping so that the aluminum electric wires are connected to the terminal (e.g. see Patent Document 1).

### Citation List

### Patent Literature

Patent Document 1: JP 2018-113181 A

US 2011/094797 A1, disclosing the preamble of claim 1 and DE 10 2013 101 080 B3 are further prior art.

### SUMMARY OF THE INVENTION

However, in a conventional connecting structure, the bundle of cores is crimped by the terminal to connect the aluminum electric wires to the terminal, whereby crimping may cause the conductor cores forming the bundle of cores to be separated from each other to generate a gap between the conductor cores, so that an oxide coating may be formed on surfaces of the conductor cores, and thereby, the conductive connection between the aluminum electric wires and the terminals may be unstable after crimping.

An objective of the present invention is to provide a terminal connecting structure which may enable the conductivity to be improved.

The invention is defined by claim 1.

In order to achieve the objective, the inventionprovides a terminal connecting structure according to claim 1.

Optional configurations are described in the depending claims.

The invention according to claim 1 provides the conductive connection body, wherein one end of the connection body is butt-connected to the aluminum conductor,said butt connection meaning a condition where each of the tip end faces of the multiple strands is pressed against the back end face of the connection body so that the connection body and the bundle of cores are electrically connected to each other, and another end of the connection body is connected to the terminal via crimping. This enables the terminal to be connected to the electric wire via the connection body without crimping the crimped section to the bundle of cores as conventionally. This may eliminate influence of crimping on the aluminum conductor and enable the conductivity between the electric wire and the terminal to be improved.

### BRIEF DESCRIPTION OF THE DRAWINGS

Fig.1 is a perspective view of an electric wire with a terminal with a terminal connecting structure according to an embodiment of the present invention applied;
Fig.2 is an exploded perspective view of the electric wire;
Fig.3 is a view for illustrating an assembly procedure of the electric wire, showing a plan view in which one end of a connection body is butt-connected to an aluminum conductor of the electric wire;
Fig.4 is a view for illustrating an assembly procedure of the electric wire, showing a perspective view in which another end of the connection body is connected by the terminal via crimping; and
Fig.5 is a perspective view of an exemplary variation of the electric wire.

### DETAILED DESCRIPTION OF THE PREFERRED EMBODIMENTS

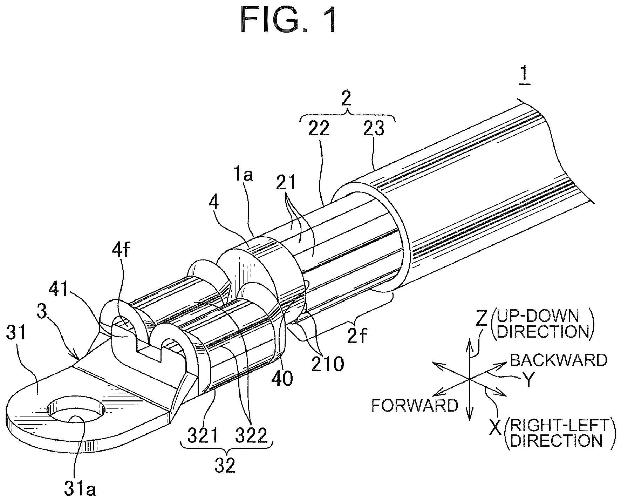

Hereinafter, an embodiment of the present invention will be described with reference to Figs.1 to 4. Fig.1 shows a perspective view of an electric wire with a terminal according to an embodiment of the present invention. For the electric wire with the terminal 1 according to the present embodiment, a terminal connecting structure according to the present invention is applied, wherein the electric wire 1 constitutes a wire harness to be arranged e.g. in an automobile.

As shown in Fig.1, the electric wire 1 includes a coated electric wire 2 (hereinafter referred to as "electric wire 2"), the terminal 3, and a connection body 4 for connecting the electric wire 2 to the terminal 3. According to the present embodiment, a direction in which the electric wire 2 and the connection body 4 are aligned is designated by an arrow Y, a direction (up-down direction) orthogonal to (intersecting) the arrow Y is designated by an arrow Z, and a direction (right-left direction) orthogonal to both of the arrow Y and the arrow Z is designated by an arrow X. Further, the connection body 4 side may be referred to as "forward" and/or "front", while the electric wire 2 side opposed thereto may be referred to as "backward" and/or "back".

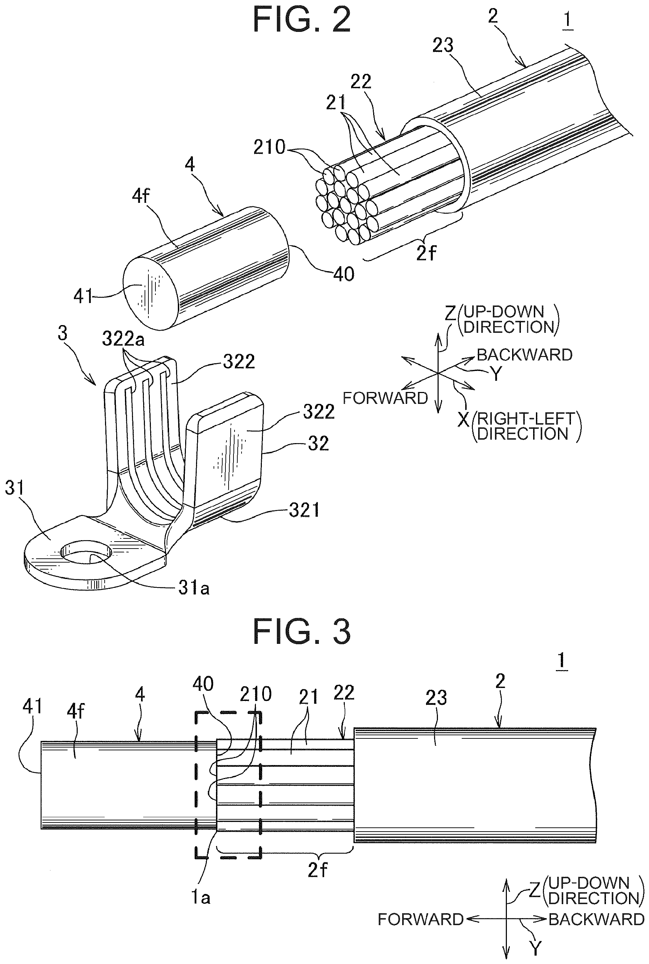

As shown in Fig.2, the electric wire 2 includes a bundle of cores 22 (aluminum conductor) as a bundle of linear strands 21 having a conductivity, and a coating section 23 for applying an insulating coating to the bundle of cores 22. The electric wire 2 is arranged with its axis extending along the forward-backward direction (arrow Y). The strands 21 are formed with aluminum. In other words, the electric wire 2 is an aluminum electric wire or an aluminum-alloy electric wire. For this electric wire 2, the bundle of cores 22 is exposed by stripping off the coating section 23 at a front end portion 2f of the electric wire 2, as shown in Fig.2.

Tips (front ends) of the multiple strands 21 are aligned in the forward-backward direction (arrow Y). This means that tip end faces 210 of the multiple strands 21 are configured so that they are positioned on a ZX-plane which extends orthogonally to the forward-backward direction. Further, the tip end faces 210 of the multiple strands 21 come into contact with a back end face 40 of the connection body 4 (one end of the connection body, intersection face), wherein the bundle of cores 22 is electrically connected (butt-connected) to the connection body 4. Here, the wording "butt-connection" means a condition where each of the tip end faces 210 of the multiple strands 21 is pressed against the back end face 40 of the connection body 4 so that the connection body 4 and the bundle of cores 22 are electrically connected to each other, as shown in Fig.1. A connecting portion la (shown in Fig.1) between the connection body 4 and the bundle of cores 22 may be jointed by means of melting or welding in order to maintain an electrically connected state between the connection body 4 and the bundle of cores 22.

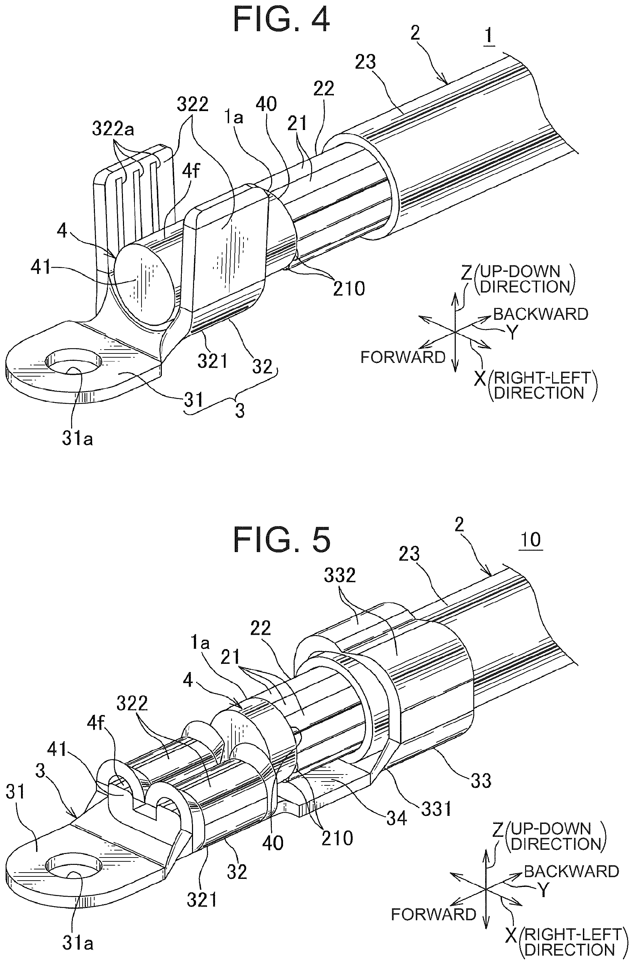

As shown in Fig.2, the terminal 3 includes a partner connecting section 31 and a connection body crimped section 32, the connection body crimped section 32 being configured to be connected to a front portion 4f of the connection body 4 (another end of the connection body) via crimping. According to the present embodiment, the partner connecting section 31 has a bolt hole 31a and is formed in a plate-shape. The connection body crimped section 32 includes a first bottom plate 321 and a pair of connection body crimped elements 322, 322, the first bottom plate 321 being continuous with a back side of the partner connecting section 31, wherein the pair of connection body crimped elements 322, 322 extends from a right and left ends of the first bottom plate 321 (ends in the direction of the arrow X) and is configured to be connected to the front portion 4f of the connection body 4 via crimping. Further, an inner surface of the connection body crimped section 32 (a surface which comes into contact with the connection body 4) has three (a plurality of) ridges 322a formed thereon, wherein the ridges 322a are formed convexly on the inner surface and lead continuously from the first bottom plate 321 to each of the connection body crimped elements 322, 322, as shown in Figs.2 and 4. Each of the ridges 322a bites into the connection body 4 as described below when the pair of connection body crimped elements 322, 322 are crimped to the connection body 4, wherein each of the ridges 322a thereby increases the reliability for mechanical connection and electrical connection between the connection body crimped section 32 and the connection body 4.

The connection body 4 is formed with aluminum. As shown in Figs.2 and 3, this connection body 4 is configured in a cylindrical shape before the connection body crimped section 32 of the terminal 3 is crimped. Then, the pair of connection body crimped elements 322, 322 of the connection body crimped section 32 of the terminal 3 is connected to the front portion 4f of the connection body 4 via crimping, wherein the tip end face 210 of each of the strands 21 is butt-connected to the back end face 40 of the connection body 4. The "front portion 4f" of the connection body 4 refers to a portion of the connection body 4 which includes a region extending from the front end 41 of the connection body 4 to a middle portion of the connection body 4 in the forward-backward direction. As shown in Fig.3, the back end face 40 of the connection body 4 extends in the ZX-plane orthogonal to the forward-backward direction (arrow Y) so that the back end face 40 is opposed to each of the tip end faces 210 of the multiple strands 21.

Such an electric wire 1 with the terminal is assembled according to the following procedure. First, the coating section 23 is stripped off at the front end portion 2f of the electric wire 2 to expose the bundle of cores 22, as shown in Fig.2. Then, the front portion 4f of the connection body 4 is placed on the first bottom plate 321, the tip end face 210 of each of the strands 21 is butt-connected to the back end face 40 of the connection body 4, and the pair of connection body crimped elements 322, 322 is brought close to the front portion 4f of the connection body 4 and then crimped thereto, as shown in Fig.4. In this manner, the electric wire 2 and the terminal 3 are electrically connected to each other via the connection body 4 to produce the complete electric wire 1 with the terminal.

The embodiment as described above enables the terminal 3 to be connected to the electric wire 2 via the connection body 4 without crimping the bundle of cores 22. This may eliminate influence of crimping on the bundle of cores 22 (aluminum conductor) and enable the conductivity between the electric wire 2 and the terminal 3 to be improved.

Further, the bundle of cores 22 (aluminum conductor) is formed from the bundle of multiple strands 21 (aluminum strands), wherein the connection body 4 includes the back end face 40 (intersection face) intersecting the axis of the electric wire 2, and wherein it is configured so that each of the tip end faces 210 of the multiple strands 21 comes into contact with the back end face 40 to electrically connect the bundle of cores 22 to the connection body 4. In this manner, it is possible to electrically connect all the strands 21 to the connection body 4.

It is to be noted that the present invention is not limited to the above-described embodiment, but includes other embodiments which can achieve the objective of the present invention, wherein the present invention also includes variations as described below.

According to the above-described embodiment, the terminal 3 is configured with the partner connecting section 31 and the connection body crimped section 32 to be connected to the front portion 4f of the connection body 4 (another end of the connection body) via crimping. However, the present invention is not limited thereto. As shown in Fig.5, the terminal 3 may integrally include the partner connecting section 31, the connection body crimped section 32, the coating crimped section 33 and the plate-shaped support section 34, wherein the connection body crimped section 32 is configured to be connected to the front portion 4f of the connection body 4 via crimping, the coating crimped section 33 is configured to be crimped to the coating section 23 of the electric wire 2, and the support section is disposed between the connection body crimped section 32 and the coating crimped section 33 and continuous with the connection body crimped section 32 and the coating crimped section 33, the support section 34 being configured to support the connecting portion la between the bundle of cores 22 and the connection body 4. It is to be noted that the same elements in Fig.5 as those in Figs.1 to 4 which have been already described in the above-described embodiment are designated by the same reference signs and the corresponding detailed description will be omitted.

The coating crimped section 33 includes a second bottom plate 331 and a pair of coating crimped elements 332, 332, the second bottom plate 331 being continuous with a back side of the support section 34, wherein the pair of coating crimped elements 332, 332 extends from a right and left ends of the second bottom plate 331 and is configured to be connected to the coating section 23 of the electric wire 2 via crimping.

The support section 34 is formed in a plate shape extending in a plane direction, wherein the plane direction includes the XY-direction. The support section 34 is disposed between the first bottom plate 321 of the connection body crimped section 32 and the second bottom plate 331 of the coating crimped section 33 and continuous with the first and second bottom plates 321 and 331, wherein the support section 34 is configured for placing the connecting portion la between the bundle of cores 22 and the connection body 4 thereon.

Such an electric wire 10 with the terminal is assembled according to the following procedure. First, the front portion 4f of the connection body 4 is placed on the first bottom plate 321, and the pair of connection body crimped elements 322, 322 is brought close to the front portion 4f and then crimped thereto. Next, the bundle of cores 22 of the electric wire 2 is placed on the support section 34, and the tip end face 210 of each of the strands 21 is butt-connected to the back end face 40 of the connection body 4. Subsequently, the coating section 23 of the electric wire 2 is placed on the second bottom plate 331, and the pair of coating crimped elements 332, 332 is brought close to the coating section 23 and crimped thereto. At this time, the connecting portion 1a (shown in Fig.5) between the bundle of cores 22 and the connection body 4 may be jointed by means of melting or welding in order to stabilize the electrically connected state between the connection body 4 and the bundle of cores 22. However, when the electrically and mechanically connected state between the connection body 4 and the electric wire 2 is sufficiently maintained by the connection body crimped section 32, the coating crimped section 33 and the support section 34, it is not necessary to joint the connecting portion la by means of melting or welding.

According to the embodiment as described above, the terminal 3 integrally includes the connection body crimped section 32, the coating crimped section 33 and the support section 34, wherein the connection body crimped section 32 is crimped to the front portion 4f of the connection body 4 (another end of the connection body), and the coating crimped section 33 is crimped to the coating section 23 of the electric wire 2. This results in that a portion of the connection body 4 (connecting portion 1a) which is the back end face 40 (one end of the connection body) and butt-connected to the bundle of cores 22 (aluminum conductor) is supported by the support section 34 more stably. This may enable the conductivity between the electric wire 2 and the terminal 3 to be further improved.

The scope of the invention is defined by the appended claims.

### Reference Signs List

- 1, 10: Electric wire with a terminal (terminal connecting structure)
- 2: Electric wire
- 21: Strands (aluminum strands)
- 22: Bundle of cores (aluminum conductor)
- 23: Coating section
- 210: Tip end faces of the respective strands
- 3: Terminal
- 32: Connection body crimped section
- 33: Coating crimped section
- 34: Support section
- 4: Connection body
- 4f: Front portion of the connection body (another end of the connection body)
- 40: Back end face of the connection body (one end of the connection body, intersection face)

## Claims

1. A terminal connecting structure for connecting a terminal (3) to an electric wire (1), said terminal connecting structure comprising a terminal (3) and an electric wire (1), the electric wire (1) including an aluminum conductor, wherein the aluminum conductor is formed from a bundle (22) of multiple linear aluminum strands (21), **characterized in that** the terminal connecting structure further comprises:
a conductive connection body (4) formed with aluminum,
wherein one end (40) of the connection body (4) is butt-connected to the aluminum conductor, said butt connection meaning a condition where each of tip end faces (210) of the multiple strands (21) is pressed against a back end face (40) of the connection body (4) so that the connection body (4) and the bundle of multiple linear aluminum strands (21) are electrically connected to each other, and
wherein another end (41) of the connection body (4) is connected to the terminal (3) via crimping.

2. The terminal connecting structure according to claim 1,
wherein the connection body (4) comprises an intersection face intersecting an axis of the electric wire, and
wherein said connection body (4) is configured so that each of tip end faces of the multiple aluminum strands (21) comes into contact with the intersection face to electrically connect the aluminum conductor to the connection body (4).

3. The terminal connecting structure according to claim 1 or 2,
wherein the electric wire (1) comprises a coating section (23) coating the aluminum conductor,
wherein the terminal integrally comprises:
a connection body crimped section (32) configured to be crimped to the another end of the connection body (4);
a coating crimped section (33) configured to be crimped to the coating section (23); and
a support section (34) disposed between the connection body crimped section (32) and the coating crimped section (33), wherein the support section (34) is continuous with the connection body crimped section (32) and the coating crimped section (33), and configured to support the aluminum conductor and the one end of the connection body.

## Patentansprüche

1. Anschlussverbindungsstruktur zum Verbinden eines Anschlusses (3) mit einem Elektrokabel (1), wobei die Anschlussverbindungsstruktur einen Anschluss (3) und ein Elektrokabel (1) umfasst, das Elektrokabel (1) einen Aluminiumleiter beinhaltet, wobei der Aluminiumleiter aus einem Bündel (22) mehrerer linearer Aluminiumstränge (21) gebildet wird,
**dadurch gekennzeichnet, dass** die Anschlussverbindungsstruktur weiter umfasst:
einen leitfähigen Verbindungskörper (4), der aus Aluminium gebildet ist,
wobei ein Ende (40) des Verbindungskörpers (4) mit dem Aluminiumleiter endverbunden ist, wobei die Endverbindung einen Zustand meint, bei dem jede von Spitzenendflächen (210) der mehreren Stränge (21) gegen eine Rückendfläche (40) des Verbindungskörpers (4) gepresst wird, so dass der Verbindungskörper (4) und das Bündel mehrerer linearer Aluminiumstränge (21) elektrisch miteinander verbunden sind, und
wobei ein anderes Ende (41) des Verbindungskörpers (4) mit dem Anschluss (3) mittels Verbördelung verbunden ist.

2. Anschlussverbindungsstruktur nach Anspruch 1,
wobei der Verbindungskörper (4) eine Schnittfläche umfasst, die eine Achse des Elektrokabels schneidet, und
wobei der Verbindungskörper (4) so ausgebildet ist, dass jede von Spitzenendflächen der mehreren Aluminiumstränge (21) mit der Schnittfläche in Kontakt kommt, um den Aluminiumleiter elektrisch mit dem Verbindungskörper (4) zu verbinden.

3. Anschlussverbindungsstruktur nach Anspruch 1 oder 2,
wobei das Elektrokabel (1) einen Beschichtungsabschnitt (23) umfasst, der den Aluminiumleiter beschichtet,
wobei der Anschluss ganzheitlich umfasst:
einen mit dem Verbindungskörper verbördelten Abschnitt (32), der dazu ausgebildet ist, mit dem anderen Ende des Verbindungskörpers (4) verbördelt zu werden;
einen mit der Beschichtung verbördelten Abschnitt (33), der dazu ausgebildet ist, mit dem Beschichtungsabschnitt (23) verbördelt zu werden; und
einen Stützabschnitt (34), der zwischen dem mit dem Verbindungskörper verbördelten Abschnitt (32) und dem mit der Beschichtung verbördelten Abschnitt (33) angeordnet ist, wobei der Stützabschnitt (34) mit dem mit dem Verbindungskörper verbördelten Abschnitt (32) und dem mit der Beschichtung verbördelten Abschnitt (33) fortlaufend ist und dazu ausgebildet ist, den Aluminiumleiter und das eine Ende des Verbindungskörpers zu stützen.

## Revendications

1. Structure de connexion de borne pour connecter une borne (3) à un fil électrique (1), ladite structure de connexion de borne comprenant une borne (3) et un fil électrique (1), le fil électrique (1) incluant un conducteur en aluminium, dans laquelle le conducteur en aluminium est formé à partir d'un faisceau (22) de multiples torons linéaires en aluminium (21),
**caractérisée en ce que** la structure de connexion de borne comprend en outre :
un corps de connexion conducteur (4) formé avec de l'aluminium,
dans laquelle une extrémité (40) du corps de connexion (4) est connectée de façon aboutée au conducteur en aluminium, ladite connexion aboutée signifiant une condition où chacune de faces terminales d'embout (210) des multiples torons (21) est pressée contre une face terminale arrière (40) du corps de connexion (4) pour que le corps de connexion (4) et le faisceau de multiples torons linéaires en aluminium (21) soient électriquement connectés l'un à l'autre, et
dans laquelle une autre extrémité (41) du corps de connexion (4) est connectée à la borne (3) par l'intermédiaire de sertissage.

2. Structure de connexion de borne selon la revendication 1,
dans laquelle le corps de connexion (4) comprend une face d'intersection intersectant un axe du fil électrique, et
dans laquelle ledit corps de connexion (4) est configuré pour que chacune de faces terminales d'embout des multiples torons en aluminium (21) entre en contact avec la face d'intersection pour connecter électriquement le conducteur en aluminium au corps de connexion (4).

3. Structure de connexion de borne selon la revendication 1 ou 2,
dans laquelle le fil électrique (1) comprend une section d'enrobage (23) enrobant le conducteur en aluminium,
dans laquelle la borne comprend de façon monobloc :
une section sertie de corps de connexion (32) configurée pour être sertie sur l'autre extrémité du corps de connexion (4) ;
une section sertie d'enrobage (33) configurée pour être sertie sur la section d'enrobage (23) ; et
une section de support (34) disposée entre la section sertie de corps de connexion (32) et la section sertie d'enrobage (33), dans laquelle la section de support (34) est continue avec la section sertie de corps de connexion (32) et la section sertie d'enrobage (33), et configurée pour supporter le conducteur en aluminium et l'une extrémité du corps de connexion.
